Europäisches Patentamt

European Patent Office

Office européen des brevets

(11) Publication number: **0 080 309**
**A2**

(12) # EUROPEAN PATENT APPLICATION

(21) Application number: 82306037.1

(51) Int. Cl.³: **G 01 B 7/06**

(22) Date of filing: **12.11.82**

(30) Priority: **16.11.81  GB 8134452**

(43) Date of publication of application: **01.06.83**
**Bulletin 83/22**

(84) Designated Contracting States: **CH DE FR GB IT LI SE**

(71) Applicant: **DE LA RUE SYSTEMS LIMITED, De la Rue House 3/5 Burlington Gardens, London W1A 1DL (GB)**

(72) Inventor: **Hilton, Graham Harold, 18, Ashley Close, Lovedean Hampshire (GB)**

(74) Representative: **Abbott, Leonard Charles et al, GILL JENNINGS & EVERY 53/64 Chancery Lane, London WC2A 1HN (GB)**

(54) **Apparatus for analysing sheets.**

(57) Apparatus is disclosed for detecting the passage of double or overlapping banknotes, or for detecting banknotes with corner folds or on which there is adhesive tape. Banknotes are fed serially into the nip of a pair of rotating rollers (R1, R2). A follower roller (R2) is displaced vertically from a datum roller (R1) by the passage of the banknote. The thickness of the banknote is gauged by a pair of proximity sensors (S1, S2) over each end of the follower roller.

A feature of the apparatus is the provision of a land (5) at each end of the datum roller (R1). This ensures that the banknote-engaging surfaces of the rollers maintain their separation when no banknote is passing through the nip, so as to prevent any dirt being ironed flat onto the rollers.

In an alternative embodiment, both surfaces of the rollers are flat, and the separation of the rollers is maintained by controlling the position of the follower roller axis, the follower roller axle being supported at each end by brackets which are pivoted about a further axis.

CONTROL CIRCUIT

De La Rue Systems Limited            30/2062/02

- 1 -

APPARATUS FOR ANALYSING SHEETS

This invention relates to apparatus for analysing the condition of sheets, and is especially useful for sorting banknotes according to their condition.

In automatic banknote handling apparatus, it is frequently necessary to detect the passage of double or overlapping banknotes, banknotes with corner folds or "Z" folds, and banknotes with adhesive tape, staples, paper clips or pins. Apparatus for detecting such banknotes in the past has generally included an array of optical detectors arranged across the width or length of the banknotes as they pass a detecting station. Such apparatus is expensive and relatively complex .

Gauging apparatus for laminar materials is disclosed in British Patent No 1 497 181, in which sheets such as banknotes are fed into a nip of a pair of rotating rollers, the thickness of the sheet causing the further separation of the rollers. A sensor responds to the displacement of one of the rollers away from the other, to produce a signal indicative of the thickness of the sheet passing through the rollers. If the thickness is above a preset threshold, then the presence of plural sheets is assumed and the sheets are subsequently diverted to an alternative path. Apparatus according to this previous patent specification, however, although considerably simpler than the optical apparatus described above, is not suitable for the detection of all the faults listed above. Moreover, the rollers tend to accumulate dirt from the banknotes. The result of an accumulation of dirt, which would be ironed flat onto the rollers during the rotation of the rollers in between the passage of sheets, would be to confuse the output from the sensor.

- 2 -

The accumulation of dirt on rollers has in the past been avoided with the use of a mechanical scraper which scrapes the roller surface to remove the dirt. However, the use of a scraper is noisy and its position relative to the roller is difficult to adjust.

It is therefore an object of the present invention to provide a simple, mechanical apparatus for gauging the thickness of a sheet, using a pair of rotating rollers, which suffers less from dirt accumulation and is not too noisy.

Apparatus according to the invention for gauging the thickness of a sheet, comprises a gauging nip defined by a datum roller of rigid material with a fixed axis and a movable follower roller whose axis is parallel to the datum roller, means for biasing the rollers together and drive means for rotating a roller to convey the sheet through the nip formed by portions of the rollers' lengths, and a sensor responsive to the position of the follower roller to provide a thickness signal indicative of the thickness of that portion of the sheet held in the nip of the rollers, wherein the rollers are so arranged that in the absence of a sheet the said portions of their lengths are prevented from mutual contact. In this way, any dirt that has been passed from a sheet onto the rollers is not ironed flat when the sheet has left the rollers, and is eventually removed from the rollers by the passage of subsequent sheets through the rollers.

In one form of apparatus, one of the rollers is profiled with a land at each end, the said portion of its length lying between the two lands. It is then the lands which engage the other roller and prevent the contact of the said portions of their lengths. In the preferred form of apparatus, the datum roller has a pair of lands, and the follower roller is formed of an elastic material with a thin metal tyre. The datum roller is preferably metallic; the datum roller and the said metal tyre may both be of steel. The follower roller preferably has a fixed axle but is eccentrically deformable by virtue of its elasticity.

This apparatus ideally comprises two sensors, placed over opposite end portions of the follower roller. The or each sensor is ideally a linear variable differential transformer whose core is coupled to the surface of the follower roller. Where, however, the sensor or sensors are of the magnetic type, the surface of the follower roller is used to complete the magnetic circuit of the differential transformer, the sensor then being sensitive to its separation from the said surface.

The minimum separation between the said portions of the lengths of the rollers is determined by the profiles of the rollers, and is preferably between one eighth and one quarter of the expected thickness of a clean sheet.

In another form of apparatus, neither of the rollers has a special profile, but the separation of the sheet-engaging portions of the lengths of the rollers is maintained by controlling the position of the axis of the sensor roller.

- 4 -

When a single or a double sheet forces the follower roller apart from the datum roller, a transducer responds to the movement of the follower roller axis to provide an indication of the degree of displacement.

In a third form of apparatus in accordance with the invention, the separation of the rollers is also maintained by controlling the position of the follower roller axis, but an optical detector is used for monitoring the roller separation.

The apparatus preferably includes an electronic circuit responsive to timewise variations in the level of the thickness signal to determine the condition of the sheet and to provide an output signal indicative of whether the sheet should be accepted or rejected.

In order that the invention may be better understood, the three preferred embodiments of the invention will now be described with reference to the accompanying drawings, in which:-

Figure 1 illustrates the pair of nip rollers and a pair of magnetic sensors, in accordance with a first embodiment;

Figure 2A to 2E illustrate the variation of the thickness signal with time for various types of banknote passing through the apparatus;

Figures 3A and 3B show in side and end elevation a pair of nip rollers and a transducer in accordance with a second embodiment;

Figure 4 shows in                    end elevation a pair of nip rollers and an optical detector in accordance with a third embodiment; and

0080309

- 5 -

Figure 5 shows the variation with time of optical intensity received by the optical detector of Figure 4.

As described above, the engagement of the rollers of the apparatus described in British Patent 1497181 with a banknote causes contamination of the rollers with dirt. The purpose of the present invention is to prevent the dirt being ironed flat by the system, in between the passage of banknotes, so as to allow the dirt to be removed by subsequent banknotes.

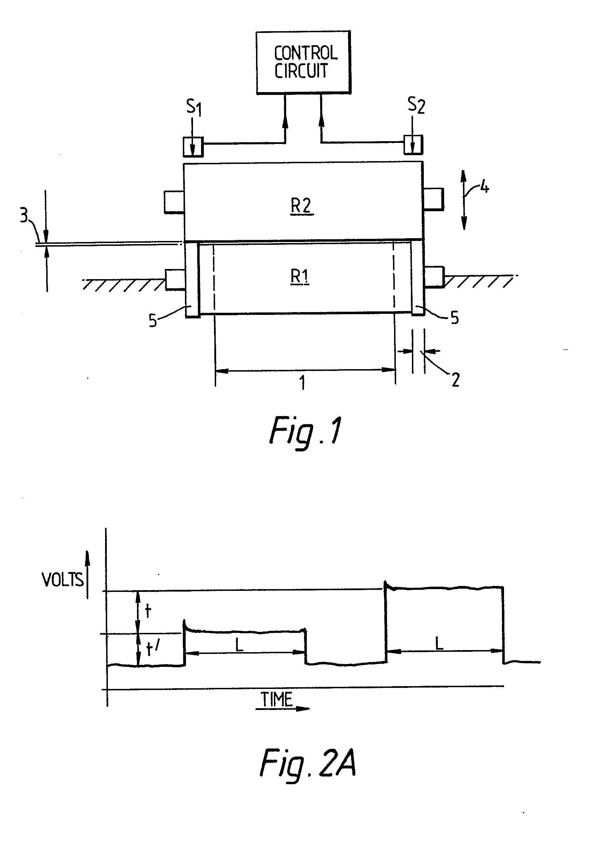

In Figure 1, a datum roller R1 made of steel rotates about a fixed axis. A sensor roller R2 of a similar radius and length to the datum roller engages lands 5 of the surface of the datum roller and is free to rotate about an axis parallel to the datum roller axis. The sensor roller R2 has a rubber core and a steel tyre, and is eccentrically deformable in the direction indicated by the arrow 4. A banknote is fed (by means not shown) into the nip of the rollers in a central portion of the rollers lying between the lands 5 of the datum roller. The banknote is fed lengthwise, its width 1 being slightly less than the separation of the lands 5.

The banknote is fed between the rollers, and causes the sensor roller to be displaced in an upward direction in Figure 1. The datum roller no longer engages with the sensor roller lands, but both rollers continue to rotate. The datum roller is driven through its axle by a motor (not shown), and the sensor roller R2 is driven by frictional engagement with the banknote surface. When the banknote has passed through the apparatus, the sensor roller returns to its original position and continues to rotate by virtue of its frictional engagement with the lands 5 of the datum roller R1.

The vertical displacement of the sensor roller R2 is a direct function of the maximum thickness of the portion of the banknote which lies in the nip of the rollers. If the banknote is thicker at one side than the other side, for example due to a paper clip on the edge of the banknote, then one end of the sensor roller will rise higher than the other end. For this reason, it is preferable as illustrated to use two sensors, S1 and S2, arranged one at each end of the sensor roller. These sensors may be of any suitable type, optical or mechanical, but are preferably linear variable differential transformers (LVDT) of the magnetic type, as described for example in British Patent No 1 497 181. The sensors detect the proximity of the surface of the sensor roller and produce a thickness signal which conveys information about the thickness of all regions of the banknote.

The lands 5 in the datum roller R1 have a width 2 of between 2 and 3 mm. The height of the lands is sufficient to provide a minimum separation 3 between the sheet-engaging surfaces of the rollers of between 0.012 mm and 0.025 mm. Banknotes are typically 0.1 mm thick, so the minimum separation lies between one eighth and one quarter of the expected thickness of a clean banknote. In between the passage of banknotes through the rollers this clearance between the banknote-engaging portions of the lengths of the rollers ensures that any accumulated dirt is not ironed onto the roller surfaces, but is instead left on the rollers to be eventually cleared during the passage of subsequent banknotes through the rollers.

Figures 2A to 2E illustrate a timewise variation in the thickness signal derived from one of the sensors S1, S2 of Figure 1, for different types of banknote.

Figure 2A was obtained with the passage first of a single banknote and then of a double banknote, i.e. a pair of superimposed banknotes. The voltage of the thickness signal is plotted against time. The thickness signal to the left of the diagram begins at a level corresponding to the absence of a banknote. It then rises through a voltage difference t' corresponding to the thickness of a single banknote minus the height of the lands 5, and stays at this level for a time L corresponding to the length of a banknote. The level of the thickness signal then drops to the original value for the period in between the passage of the single and double banknotes; it then rises suddenly by t'+t, where t corresponds to the thickness of a single banknote, and maintains this level again for a time L. The inertia of the sensor roller causes the level of the thickness signal to overshoot its steady level, and then to bounce back and forward for a few oscillations. These initial oscillations of the thickness signal, immediately following the entry of the edge of a banknote into the nip of the rollers, are ideally damped out as quickly as possible. Suitable debounce circuits for eliminating these oscillations from the thickness signal are available commercially.

Our European patent application No.81903100.6 (Publication No.0064523 ) describes a circuit responsive to such a thickness signal for analysing the presence of single, double or other multiple notes, and can be used in combination with apparatus according to this invention.

Figure 2B illustrates the signal produced during the passage of two overlapping banknotes. Each banknote would produce a signal of a height t' for a period L, but the combination of two overlapping banknotes produces a signal of length 2L - y, containing a central portion

0080309

- 8 -

of length y at a height t+t' corresponding to the overlap.

Figure 2C illustrates the passage of a banknote with a corner fold on its leading edge, followed by a banknote with a corner fold on its trailing edge. Each folded portion is of double the thickness, and shows up as a thickness signal of height t+t'. The duration of the signal for each banknote is of length Lc, corresponding to the length of a banknote reduced by the corner fold.

Figure 2D illustrates the passage of a banknote on which is stuck some adhesive tape. The additional height of the thickness signal for a portion Ls of the passage of the banknote is due to the extra thickness of the adhesive tape. The length of adhesive tape across the note determines the duration Ls of the anomaly in the thickness signal.

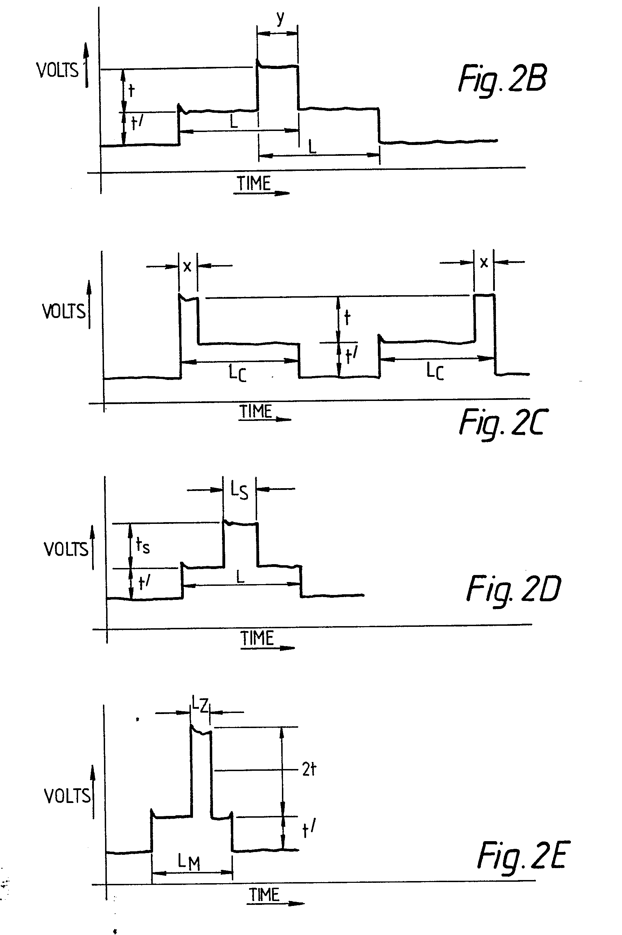

Figure 2E illustrates the passage of a banknote with a "Z" fold. A banknote folded twice in this way is three times the normal thickness over a portion of its length. The thickness signal therefore increases to a height 2t+t' for a period Lz corresponding to the length of the "Z" fold, and the overall length of the note is shorter, producing an increased thickness signal for only a duration Lm. Without the fold, the length of the banknote would be equal to Lm + 2Lz.

Staples, paper clips and pins stuck onto the banknote are indicated in the thickness signal as huge spikes, the duration of which depend upon the position of the items on the banknote.

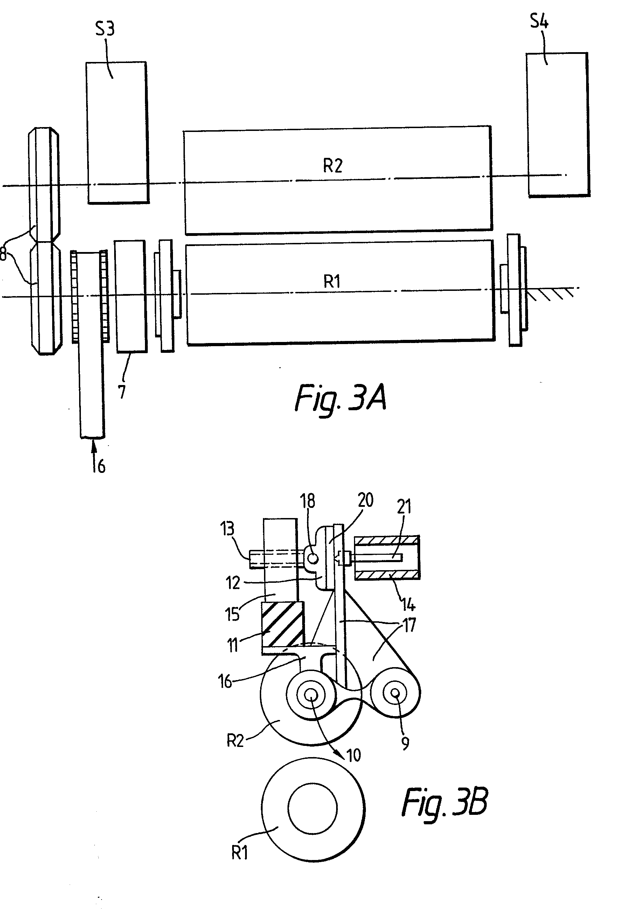

A second embodiment of the invention is shown in Figs 3A and 3B Neither of the roller surfaces is profiled with lands; both surfaces are flat, but the follower roller R2 is a spaced or "flying" roller. The axle of the follower roller R2 does not have a fixed position, but is movable relative to the fixed axis of the datum roller R1. The roller R2/is mounted on an adjustable, pivotable bracket. The drive to the rollers is by means of a toothed

0080309

- 9 -

belt 6 to the datum roller R1 via gearing 7, and this drive is transmitted to the adjustable follower roller R2 by engaging rubber drive rollers 8, the drive rollers maintaining driving contact even when single or double banknotes are fed into the nip. The axle of the follower roller is supported at each end by a bracket 17 and a T-shaped block 16 pivoted about a point 9, the pivot point being displaced from the position of the axle in the direction of banknote travel through the nip. The follower roller is therefore free to pivot in an arc indicated by the arrow 10 in figure 3.

Associated with each of the axle supports is a transducer assembly S3, S4. The T-shaped block 16 attached to the axle of the follower roller is anchored to a fixed support block 15 by way of a rubber damping and return spring 11. The support block 15 has a threaded bore which accommodates a threaded pin 13 attached by a universal joint 18 to buffer 12 with a rubber pad 20. The rubber pad 20 abuts against a flat surface of the bracket 17, and defines the rest position of the follower roller in the absence of a banknote. The rubber pad also absorbs the impact of the bracket 17 when the follower roller returns to its rest position. It is preferably made of half millimeter thick rubber of 60/70 shore hardness. The transducer 14, which is a linear variable differential transformer, is fixed relative to the datum roller axis. It has a movable core 21 which is attached to the pivoted bracket 17 and follows the movements of the follower roller. An output from the L.V.D.T. 14 is therefore indicative of the instantaneous displacement of the follower roller R2, and hence to the separation of the two rollers.

When the rollers are forced apart by the passage of a banknote or banknotes, the rubber damping and return spring 11 is compressed. Oscillations of the follower roller and bracket 17 are damped by the spring, and, when the banknotes leave the nip, the spring expands and returns the follower roller to its rest position, with the flat surface of the bracket 17 resting against the rubber pad 20.

The separation of the follower roller R2 from the datum roller R1 may be pre-adjusted by means of the threaded pivotable rod 13. This provides a fine adjustment of the position of the buffer 12 relative to the fixed support block 15, which determines the quiescent position of the follower roller. This pre-adjustment is assisted by means of a control circuit which responds to the output from the L.V.D.T. 14 to give an indication (for example a green light) when the separation of the rollers is correct.

The position of the follower roller R2 is pre-adjusted to give a suitable minimum separation between the sheet-engaging surfaces of the rollers in the absence of a banknote. This minimum separation is preferably between 1/8 and 1/4 of the expected thickness of a clean banknote, as described above for the first embodiment of the invention.

When the rollers are in use, the same transducer 14 is used to provide a thickness signal indicative of the separation of the rollers and hence of the thickness of the banknote or banknotes in the nip of the rollers.

The outputs of the L.V.D.T. correspond to those shown in figures 2A to 2E.

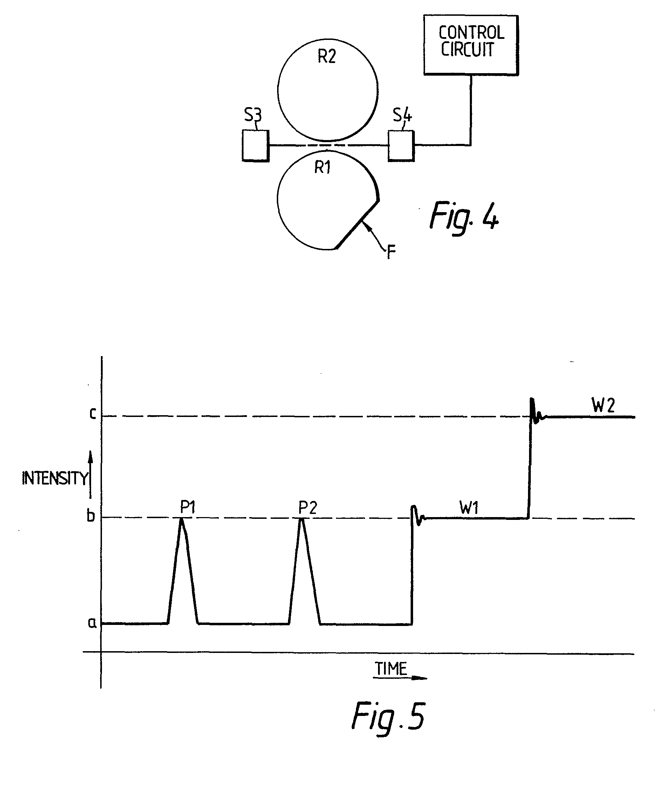

A third embodiment of the invention will now be described with reference to figures 4 and 5. The arrangement of the datum roller R1 and the follower roller R2 is very similar to that shown in figure 3A, but the transducer assembly is different. In place of the L.V.D.T. there is an optical detector system comprising, at one end of the rollers, a light source S3 and a photodetector S4. The light source S3 shines a parallel beam of light through the gap between the end portions of the rollers, and any emergent light is collected and detected by the photodetector S4. The intensity of the light collected is proportional to the separation of the rollers, and therefore the signal from the detector is a thickness signal indicative of the separation of the rollers. In the preferred form of this apparatus, a portion of the periphery of the end of one of the rollers, for example the datum roller R1, is cut away. The flat portion F which remains is shown in the end elevation in figure 4. When this flat portion is closest to the follower roller R2, the gap through which the beam

- 12 -

of light is shone suddenly increases, and the signal from the detector shows a corresponding peak. The purpose of this arrangement is to provide a measurable peak intensity thickness signal in the absence of a banknote, because it is difficult to detect the small amount of light emerging from the rollers when they are at their minimum separation. A typical thickness signal follows the variation in light intensity with time in the manner shown in figure 5.

In figure 5, the low level $a$ of light intensity corresponds to the minimum separation of the rollers. The peak P1 in the intensity signal occurs when the flat portion F of the periphery of the datum roller is closest to the follower roller. In the absence of any banknote, successive peaks in the intensity signal (P1, P2,etc) occur with a period equal to the period of rotation of the datum roller. The radius of the flat portion F is chosen so that the height of each peak P1, P2 corresponds to the height due to a banknote of normal thickness. The corresponding maximum level of intensity $b$ is then used by the control circuit as a datum level. The control circuit, which responds to the thickness signal, stores the datum level, and, when a banknote is to be passed through the rollers, subsequently compares the thickness signal with the stored datum level. The waveform shown in figure 5 shows a portion W1 which results from the passage of a single banknote through the nip of the rollers. The portion W2 of the waveform, at a level $c$, corresponds to the passage of a double banknote through the nip of the rollers, and would be detected as such by the control circuit.

- 13 -

CLAIMS

1. Apparatus for gauging the thickness of a sheet, comprising: a gauging nip defined by a datum roller (R1) of rigid material with a fixed axis and a movable follower roller (R2) whose axis is parallel to the datum roller, means for biasing the rollers together and drive means for rotating a roller to convey the sheet through the nip formed by portions of the rollers' lengths, and a sensor (S1, S2) responsive to the position of the follower roller to provide a thickness signal indicative of the thickness of that portion of the sheet held in the nip of the rollers; and characterized in that the rollers are so arranged that in the absence of a sheet the said portions of their lengths are prevented from mutual contact.

2. Apparatus in accordance with claim 1, wherein one of the rollers is profiled with a land (5) at each end.

3. Apparatus in accordance with claim 1 or 2, wherein the follower roller is formed of an elastic material with a thin metal tyre.

4. Apparatus in accordance with claim 1, wherein the follower roller has a fixed axle and is eccentrically deformable relative to the axle.

5. Apparatus in accordance with claim 1, wherein the sensor is a linear variable differential transformer whose core is coupled to the surface of the follower roller.

- 14 -

6. Apparatus in accordance with claim 1, wherein the separation of the sheet-engaging portions of the lengths of the rollers is maintained at or above a pre-adjustable minimum value by means controlling the position of the axis of the sensor roller.

7. Apparatus in accordance with claim 6, wherein an axle of the follower roller is attached to a frame (16, 17) at each end of the roller, each frame being pivotable about an axis (9) which is parallel to the rollers but displaced from the axis of the follower roller in the direction of travel of the sheet through the rollers, the apparatus including a linear variable differential transformer (14, 21) the core of which is attached to one of the frames and moves with the follower roller.

8. Apparatus in accordance with claim 6, wherein the said sensor is a photodetector (Figure 4B) arranged adjacent to the gap between the rollers, and the apparatus includes a light source for shining a substantially parallel beam of light through the gap between the rollers and into the photodetector.

9. Apparatus in accordance with claim 8, wherein the light source and the photodetector are arranged adjacent an end portion of the rollers, and wherein a portion of the periphery of the end of one of the rollers is cut away to leave a flat portion (F), the flat portion increasing the gap through which the beam of light is shone whenever the flat portion is closest to the other one of the two rollers.

10.    Apparatus for sorting banknotes including gauging apparatus in accordance with claim 1, and further including an electronic circuit responsive to time-wise variations in the level of the thickness signal from the gauging apparatus to determine the condition of a banknote fed through the nip of the rollers, and to provide an output signal indicative of whether the banknote should be accepted or rejected.

Fig.1

Fig.2A

0080309

2/4

Fig.2B

Fig.2C

Fig.2D

Fig.2E

0080309

3/4

S3                                    S4

R2

R1

7

Fig. 3A

16

18    20    21
13

12
15
11                    17
16

R2              9

10

R1          Fig. 3B

CONTROL
CIRCUIT

R2

S3

S4

R1

F

*Fig. 4*

INTENSITY

c — — — — — — — — — — — — — — — — — — — — — W2

b — — — — — P1 — — — — P2 — — — — — W1 — —

a

TIME

*Fig. 5*